# EUROPEAN PATENT SPECIFICATION

(11) **EP 2 821 260 B1**
(45) Date of publication and mention of the grant of the patent: **30.05.2018**
(21) Application number: 13754201.5
(22) Date of filing: 06.01.2013
(51) Int. Cl.: B60C 23/04

(54) **METHOD OF SETTING SENSOR OF MOTOR VEHICLE TYRE PRESSURE MONITORING SYSTEM, SENSOR AND SETTING DEVICE FOR SENSOR**
VERFAHREN ZUR EINSTELLUNG EINES SENSORS EINES REIFENDRUCKÜBERWACHUNGSSYSTEMS BEI EINEM KRAFTFAHRZEUG, SENSOR UND EINSTELLUNGSVORRICHTUNG FÜR DEN SENSOR
PROCÉDÉ DE MONTAGE DE CAPTEUR D'UN SYSTÈME DE CONTRÔLE DE PRESSION DE PNEU DE VÉHICULE À MOTEUR, CAPTEUR ET DISPOSITIF DE MONTAGE POUR CAPTEUR

(30) Priority: 28.02.2012 CN 201210047055
(43) Date of publication of application: 07.01.2015
(73) Proprietor: Hamaton Automotive Technology Co., Ltd., Linping Yuhang, Hangzhou Zhejiang 311100 (CN)
(72) Inventor: ZHANG, Jianer, Zhejiang 311100 (CN)
(74) Representative: Kransell & Wennborg KB
(86) International application number: PCT/CN2013/070127
(87) International publication number: WO 2013/127273

(56) References cited:
- CN-A- 101 722 802
- CN-A- 102 529 612
- TW-A- 200 819 319
- TW-A- 200 833 526
- TW-A- 201 231 317
- TW-B- I 224 561
- US-A1- 2004 155 764
- US-A1- 2005 104 722
- US-A1- 2009 033 478

## Description

### Field of the Invention

The invention relates to a tire pressure monitoring system (TPMS) in a motor vehicle, in particular to a sensor for a tire pressure monitoring system in a motor vehicle, and a setting method and a setter thereof.

### BACKGROUND OF THE INVENTION

TPMS is shorted for Tire Pressure Monitoring System, comprising a sensor arranged in a tire and a receiving and processing unit arranged in a motor vehicle, used for monitoring data (for example, pressure and temperature etc) related to the tire, and informing a driver for a timely handling in the form of sound and image (text description) in the event of abnormal change of data related to the tire. TPMS is based on the operating principle that data related to the tire is subject to acquisition and processing by the sensor, the processed data is then sent by wireless means in a special data format to the receiving and processing unit in the motor vehicle, and then the receiving and processing unit decodes the data received and displays relevant information.

Since its appearance in 2000, TPMS has been subject to upgrade and improvement for many times. At present, the most popular TPMS consists of four sensors and a receiving processor, referred to as a direct-type TPMS, in which, a TPMS sensor is a critical component in the TPMS. The battery-powered TPMS sensor can be generally used 5-7 years. Therefore, it is necessary to replace with a new TPMS sensor after a certain time. At present, there are 6-7 suppliers in the world supplying TPMS for the original motor vehicle manufacturer. Since 2000, TPMS has been subject to continuous design and update and developed into 60-70 different types. Each sensor has different data formats for sending signals. The major problem is different sensors are non-interchangeable, and a certain sensor may be only used in a certain type of motor vehicle. Therefore, an auto repair shop may store many different types of sensors for different types of vehicles waiting for maintenance in future. Thus it is inconvenient for both the auto repair shop and final consumers. And it is inconvenient to replace a damaged sensor or a battery-exhausted sensor.

For the above-mentioned problems, there is a solution in the past, namely, a plurality of encoding procedures is installed in a sensor in advance. When in use, the above-mentioned encoding procedures encode data acquired in sequence, and the sensor sends the data immediately once it is encoded until the data format is correct. The solution can reduce trouble for the auto repair shop. However, the sensor has a great deal of data to be processed, and the above-mentioned steps must be repeated every time when the motor vehicle is restarted, which causes large power consumption, also the sensor has higher requirements for its hardware configuration but shorter service life.

For the above-mentioned problems, there is another solution in the past, namely, no encoding procedure is stored in a sensor, and an auto repair shop is equipped with a sensor setter. When an auto needs repairing in the auto repair shop, the setter selects an encoding procedure and sends it to the sensor on the spot. This solution not only solves the above-mentioned problems but also eliminates disadvantages of the previous solution. However, the sensor may be easily imitated by lawbreakers, thus causing loss of the owner's rights and interests.

Further attention is drawn to US20090033478, disclosing a tire pressure monitoring device includes a memory that includes a plurality of selectable communication protocols to govern communication and operation.

In addition, US20050104722 discloses a universal monitor to be mounted in a tire of a vehicle, the monitor for use in a remote tire pressure monitoring system for the vehicle. The monitor includes a sensor for sensing tire pressure, and a storage device for storing a plurality of codes, each code comprising at least a data format.

### SUMMARY OF THE INVENTION

One technical problem that the invention aims at solving is to provide a method for setting a sensor for a tire pressure monitoring system in a motor vehicle, which not only can solve the problem puzzling auto repair shops, but also can avoid disadvantages of the above-mentioned background art. According to the invention this object is accomplished by a method as set out in claim 1.

Another technical problem that the invention aims at solving is to provide a sensor for a tire pressure monitoring system in a motor vehicle for realization of the above-mentioned method. For this purpose, the invention provides a sensor with the features of claim 4.

Another technical problem that the invention aims at solving is to provide a sensor setter for a tire pressure monitoring system in a motor vehicle for realization of the above-mentioned method. For this purpose, the invention provides a monitoring system comprising a sensor and a sensor setter as defined with the features of claim 6.

Preferred embodiments are the subject matter of dependent claims.

Due to adoption of the technical scheme, the setter provided by the invention is suitable for the method for setting a sensor for a tire pressure monitoring system in a motor vehicle provided by the invention. Only data encoded by the encoding procedure is required to be emitted when the sensor is set for application, thus not only solving the problem characterized by large data processing and large power consumption, but also preventing the sensor from being counterfeited by lawbreakers easily.

Due to adoption of the technical scheme, by virtue of the method provided by the invention, the sensor is provided with a plurality of optional encoding procedures. Only data encoded by the encoding procedure is required to be emitted when the sensor is set for application, thus not only solving the problem characterized by large data processing and large power consumption, but also preventing the sensor from being counterfeited by lawbreakers easily.

### BRIEF DESCRIPTION OF THE DRAWINGS

Fig. 1 is a schematic diagram of the sensor and the setter in the embodiment of the invention.
Fig. 2 is a flow diagram showing the sensor for encoding procedure processing and locking in the embodiment of the invention.
Fig. 3 is a flow diagram showing the setter for transmitting the encoding procedure processing instruction and lock-in instruction in the embodiment of the invention.

### DETAILED DESCRIPTION OF THE EMBODIMENTS

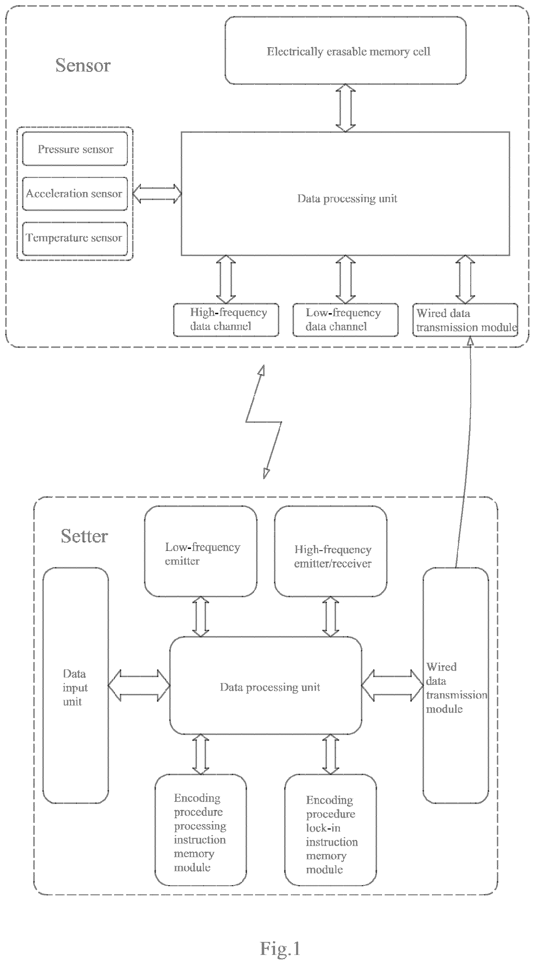

By reference to Fig. 1, the sensor for a tire pressure monitoring system in a motor vehicle is internally provided with:
a data processing unit,
an electrically erasable memory cell,
a sensor unit, at least comprising a pressure sensor, and
a data transmission unit;

The sensor for a tire pressure monitoring system in a motor vehicle, wherein the data processing unit is internally provided with an electrically erasable encoding procedure memory module in which a plurality of encoding procedures are stored; the data processing unit is also provided with an encoding procedure processing module which is used for, on the basis of encoding procedure processing instruction, processing unwanted encoding procedures in the encoding procedure memory module, in this way, the unwanted encoding procedures are subject to deletion or failure of encoding or failure of invoking for encoding; the unwanted encoding procedures are encoding procedures except the required encoding procedures.

In addition to a pressure sensor, the sensor unit can also be provided with a temperature sensor, an acceleration sensor and other sensors used for data acquisition. The sensor unit is mainly used for collecting relevant data information and sending it to the data processing unit. By using processed remaining encoding procedures, the data processing unit encodes and integrates, on the basis of executed protocol, the data required to be sent, and sends the data integrated to certain data format, by means of the data transmission unit, to an ECU in a motor vehicle.

The data transmission unit comprising a wireless data transmission module or a wired data transmission module additionally is mainly used for providing a data transmission carrier for response commands, and meanwhile providing a data path for the response commands. The wireless data transmission module comprises a high-frequency data channel and a low-frequency data channel, in which, one is used for receiving data sent from the setter and feedback data sent from the ECU in a motor vehicle, while the other is used for receiving response signal after the setter sending data and for sending data to the ECU in a motor vehicle.

The data processing unit can be a microprocessor which is provided with an electrically erasable encoding procedure memory module and an encoding procedure processing module, and further provided with an encoding procedure lock-in module.

The data processing unit is mainly used for:
At the phase of sensor setting, on the basis of the encoding procedure processing instruction from the data transmission unit, using the encoding procedure processing module to process those unwanted encoding procedures in the encoding procedure memory module, so that the unwanted encoding procedures in the encoding procedure memory module are subject to deletion or failure of encoding or failure of invoking for encoding; further, on the basis of the encoding procedure lock-in instruction from the data transmission unit, using the encoding procedure lock-in module to lock those required encoding procedures, so that the required encoding procedures are impossibly subject to deletion or modification; the lock-in instruction can be either an instruction requiring the sensor to lock the required encoding procedures or a signal indicating that the setter completely sends the encoding procedure processing instruction, on the basis of which, the encoding procedure lock-in module locks the required encoding procedures;

At run phase, responding to induction signal from the sensor unit, using the remaining required encoding procedures not processed by the encoding procedure processing module after the setting phase in the encoding procedure memory module to process signal information from the sensor unit and other data required to be sent, and to send the processed data to the data transmission unit.

The electrically erasable memory cell can store data collected by the pressure sensor unit and other sensor units.

The encoding procedure processing instruction can be an instruction to process one or one group of encoding procedure selected, namely, at the setting phase, the sensor receives a plurality of encoding procedure processing instructions for respective requirement for processing different encoding procedures, in this way, the encoding procedure processing module processes the encoding procedures one by one until only those required encoding procedures remained. The encoding procedure processing instructions also aim at all other encoding procedures except those required encoding procedures, in this way, the encoding procedure processing module processes all unwanted the encoding procedures at one time, with only required encoding procedures left.

The encoding procedure processing instruction can be a program deletion instruction, or a program modification instruction or an encoding procedure selection instruction, in which, the method for modification as for the program modification instruction includes but not limited to: modulation mode, data width, bit wide, function code, pressure range, checkout, data head code and data algorithm etc. After the data processing unit responds to the relevant instruction, encoding procedures in the encoding procedure module is subject to modification according to the above-mentioned methods, so that the encoding procedures are impossible for encoding or invoking for encoding. As for the encoding procedure selection instruction, when the sensor receives the instruction, the encoding procedure processing module of the sensor processes those encoding procedures selected by the encoding procedure processing module from encoding procedure selection instruction and those encoding procedure except these selected encoding procedures.

Please refer to Fig. 1. The sensor setter for a tire pressure monitoring system in a motor vehicle comprises:
a data processing unit,
a data input unit, and
a data transmission unit;

The sensor setter for a tire pressure monitoring system in a motor vehicle, wherein the setter is provided with an encoding procedure processing instruction memory module for invoking the data processing unit; the data transmission unit, on the basis of instruction from the data processing unit, outward transmits the encoding procedure processing instruction stored in the encoding procedure processing instruction memory module.

Further, the setter is provided with an encoding procedure lock-in instruction memory module for invoking the data processing unit; the data transmission unit, on the basis of instruction from the data processing unit, outward transmits the encoding procedure lock-in instruction stored in the encoding procedure lock-in instruction memory module.

The data processing unit can be a microprocessor which is mainly used for generating different instructions according to different needs, for sending the instructions to the sensor by virtue of the data transmission unit and meanwhile receiving feedback signal sent from the sensor.

The data input unit is used for establishing a bridge for intercommunication between the data processing unit and outer computers, for convenience of updating the programs in the encoding procedure processing instruction memory module, the programs in the encoding procedure lock-in instruction memory module, and other programs run by the setter.

The data transmission unit comprising a wireless data transmission module or a wired data transmission module additionally is mainly used for establishing a bridge for data communication between the setter and the sensor; the wireless data transmission module comprising:
a low-frequency emitter used for sending the encoding procedure lock-in instruction and other instructions to the sensor, and
a high-frequency emitter/receiver used for sending feedback signal to the sensor and receiving feedback signal from the sensor.

A method for setting a sensor for a tire pressure monitoring system in a motor vehicle wherein:
The method includes a step for providing the sensor in which a plurality of encoding procedures is stored in advance;

The method also includes a step for providing a sensor setter in which encoding procedure processing instruction sent to the sensor is stored; the encoding procedure processing instruction is a program deletion instruction, or a program modification instruction or an encoding procedure selection instruction;

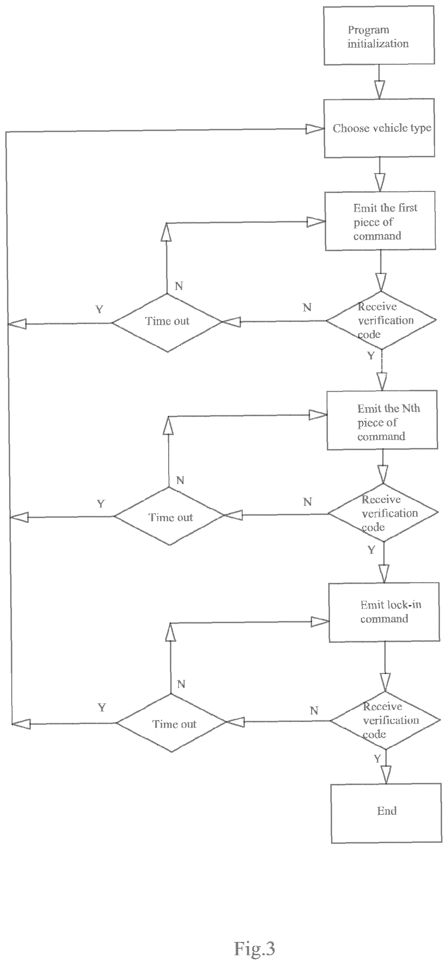

The method also includes a step for sending the encoding procedure processing instruction to the sensor by wireless or wired means by the setter once or more than once; in the embodiment, the setter sends the encoding procedure processing instruction integrally to the sensor by multiple match codes, just as shown in Fig. 3.
1-1. Users, on the basis of motorcycle type, choose applicable encoding procedure processing instructions.
1-2. The data transmission unit, on the basis of instructions from the data processing unit, sends a piece of encoding procedure processing instruction.
1-3. The setter waits for security code signal fed back from the sensor.

The above-mentioned steps shall be continued to be repeated in case of validity of verification until an integral encoding procedure processing instruction is sent out. However, the above-mentioned steps shall be restarted in case of invalidity of verification.

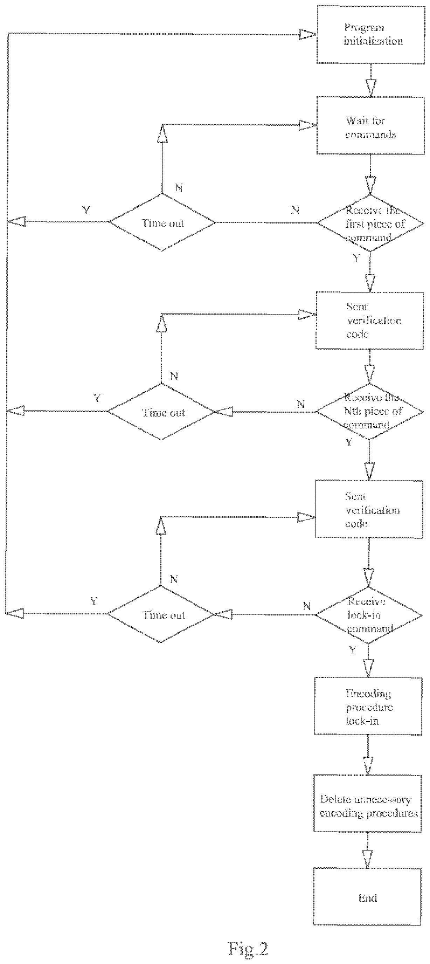

The method also includes the steps as below: the sensor receives the encoding procedure processing instruction, on the basis of which, all other encoding procedures except the required encoding procedure processing instruction are processed once for all or processed one by one, in this way, the processed encoding procedures are subject to deletion or failure of encoding or failure of invoking for encoding. Please refer to Fig. 2, specifically as follows:
2-1 The sensor waits for the encoding procedure processing instruction sent from the setter.
2-2. After receiving information sent from the setter, the sensor feeds back signal.
2-3. The data processing unit of the sensor carries out verification, the next step is started if the encoding procedure processing instruction is sent correctly or integrally; otherwise, the information is fed back to the setter.
   Above-mentioned steps shall be repeated until integral encoding procedure processing instruction is received.
2-4. The data processing unit of the sensor, on the basis of the encoding procedure processing instruction, processes the encoding procedures, in this way, the unwanted encoding procedures are subject to deletion or failure of encoding or failure of invoking for encoding.

An encoding procedure lock-in instruction is stored in the setter, the method also includes the following steps: before or after or at the same time of sending the encoding procedure processing instruction, the setter sends the encoding procedure lock-in instruction to the sensor by wireless or wired means, see Fig. 3 and continue the step 1-3, after the final piece of the encoding procedure processing instruction is sent, the data transmission unit of the setter, on the basis of instruction from the data processing unit of the sensor, sends the encoding procedure lock-in instruction.

Please refer to Fig. 2, after receiving the encoding procedure lock-in instruction and before processing other encoding procedures except the required encoding procedure, the sensor locks the required encoding procedure, in this way, it is impossible to delete or modify the required encoding procedure.

Before the sensor is installed in the tire or before the tire rolls, the above-mentioned lock-in steps are carried out according to instruction or signal from the setter as required. During implementation, the sensor can also be automatic subject to encoding procedure lock-in on the basis of external induction signal. For example, after the tire rolls, the data processing unit of the sensor responds to external induction signal such as acceleration and pressure signals etc., after which, the encoding procedure lock-in module automatically executes encoding procedure lock-in, specific steps are seen as below:
1. The data processing unit of the sensor receives signal sent from the acceleration sensor for response of tire rotation.
2. The data processing unit of the sensor responds to the signal sent from the acceleration sensor for response of tire rotation and invokes the encoding procedure lock-in module to lock the required encoding procedures, in this way, it is impossible to delete or modify the required encoding procedure.

## Claims

1. A method for setting a sensor of a tire pressure monitoring system in a motor vehicle, wherein the method comprises the steps of:
- providing the sensor in which a plurality of encoding procedures is stored in advance;
- providing a sensor setter in which encoding procedure processing instruction sent to the sensor is stored, and
- sending encoding procedure processing instruction to the sensor by wireless or wired means by the setter once or more than once,
wherein the sensor receives the encoding procedure processing instruction, on the basis of which, all other encoding procedures except a required encoding procedure are processed once for all or processed one by one, in this way, the processed encoding procedures are subject to deletion or failure of encoding or failure of invoking for encoding,
**characterized in that** an encoding procedures lock-in instruction is further stored in the sensor setter, the method further comprising the steps of:
- before or after or at the same time of sending the encoding procedure processing instruction, the sensor setter sends the encoding procedure lock-in instruction to the sensor by wireless or wired means, and
- after receiving the encoding procedure lock-in instruction and before processing other encoding procedures except the required encoding procedure, the sensor locks the required encoding procedure, in this way, it is impossible to delete or modify the required encoding procedure,
or that the sensor locks the required encoding procedure by responding to an induction signal such as acceleration and pressure signals, in this way, it is impossible to delete or modify the required encoding procedure.

2. The method according to claim 1, wherein the encoding procedure processing instruction is a program deletion instruction, or a program modification instruction or an encoding procedure selection instruction.

3. The method according to claim 1, wherein the sensor setter sends the encoding procedure processing instruction integrally to the sensor by multiple match codes, namely by the way of sending a piece of program bytes.

4. A sensor for a tire pressure monitoring system in a motor vehicle, wherein the sensor internally comprises:
- a data processing unit,
- an electrically erasable memory cell,
- a sensor unit, at least comprising a pressure sensor, and
- a data transmission unit,
wherein the data processing unit is internally provided with an electrically erasable encoding procedure memory module in which a plurality of encoding procedures are stored, and the data processing unit is further provided with an encoding procedure processing module which is used for processing unwanted encoding procedures in the encoding procedure memory module on the basis of encoding procedure processing instruction, in this way, the unwanted encoding procedures are subject to deletion or failure of encoding or failure of invoking for encoding, and
wherein the unwanted encoding procedures are encoding procedures except a required encoding procedures,
**characterized in that** the data processing unit is further internally provided with an encoding procedure lock-in module which is used for, on the basis of an encoding procedure lock-in instruction or a responsive induction signal such as acceleration and pressure signals, locking the required encoding procedures so that it is impossible to delete or modify the required encoding procedures.

5. The sensor according to claim 4, wherein the data transmission unit further comprises a wireless data transmission module or a wired data transmission module.

6. A tire pressure monitoring system in a motor vehicle, comprising:
- a sensor according to any one of claims 4 - 5, and
- a sensor setter, wherein the sensor setter comprises:
- a data processing unit;
- a data input unit, and
- a data transmission unit;
wherein the sensor setter is provided with an encoding procedure processing instruction memory module for invoking the data processing unit, the encoding procedure processing instruction is stored in the encoding procedure processing instruction memory module, and the data transmission unit, on the basis of the instruction from the data processing unit, outward transmits the encoding procedure processing instruction stored in the encoding procedure processing instruction memory module; and
wherein the sensor setter is provided with an encoding procedure lock-in instruction memory module for invoking the data processing unit, the encoding procedure lock-in instruction is stored in the encoding procedure lock-in instruction memory module; the data transmission unit, on the basis of the instruction from the data processing unit, outward transmits the encoding procedure lock-in instruction stored in the encoding procedure lock-in instruction memory module.

7. The system according to claim 6, wherein the data transmission unit of the sensor setter additionally comprises a wireless data transmission module or a wired data transmission module.

## Patentansprüche

1. Verfahren zur Einstellung eines Sensors eines Reifendrucküberwachungssystems in einem Kraftfahrzeug, wobei das Verfahren die Schritte umfasst:
- Bereitstellen des Sensors, bei welchem vorab mehrere Codierungsverfahren gespeichert sind;
- Bereitstellen einer Sensoreinstellungsvorrichtung, bei welcher ein Codierungsverfahren-Verarbeitungsbefehl eingestellt ist, der an den Sensor gesendet wird, und
- einmaliges oder mehrmaliges Senden eines Codierungsverfahren-Verarbeitungsbefehls an den Sensor durch drahtlose oder drahtgebundene Mittel durch die Einstellungsvorrichtung,
wobei der Sensor den Codierungsverfahren-Verarbeitungsbefehl empfängt, auf der Basis dessen alle anderen Codierungsverfahren als ein benötigtes Codierungsverfahren einmal für alle verarbeitet werden oder eines nach dem anderen verarbeitet werden, auf diese Weise sind die verarbeiteten Codierungsverfahren Gegenstand einer Löschung oder eines Codierungsfehlers oder eines Fehlers beim Aufrufen zur Codierung,
**dadurch gekennzeichnet, dass** ferner ein Codierungsverfahren-Sperrbefehl in der Sensoreinstellungsvorrichtung gespeichert wird, wobei das Verfahren ferner die Schritte umfasst:
- vor oder nach oder gleichzeitigt mit dem Senden des Codierungsverfahren-Verarbeitungsbefehls sendet die Sensoreinstellungsvorrichtung durch drahtlose oder drahtgebundene Mittel den Codierungsverfahren-Sperrbefehl an den Sender und
- nach dem Empfangen des Codierungsverfahren-Einschlussbefehls und vor dem Verarbeiten anderer Codierungsverfahren als dem benötigten Codierungsverfahren sperrt der Sensor das benötigte Codierungsverfahren, auf diese Weise ist es unmöglich, das benötigte Codierungsverfahren zu löschen oder zu modifizieren,
oder dass der Sensor das benötigte Codierungsverfahren durch Reaktion auf ein Induktionssignal, wie z.B. Beschleunigungs- und Drucksignale, sperrt, auf diese Weise ist es unmöglich, das benötigte Codierungsverfahren zu löschen oder zu modifizieren.

2. Verfahren nach Anspruch 1, wobei der Codierungsverfahren-Verarbeitungsbefehl ein Programmlöschungsbefehl oder ein Programmmodifizierungsbefehl oder ein Codierungsverfahren-Auswahlbefehl ist.

3. Verfahren nach Anspruch 1, wobei die Sensoreinstellungsvorrichtung den Codierungsverfahren-Verarbeitungsbefehl durch mehrere Übereinstimmungs-Codes integral an den Sensor sendet, nämlich durch Senden eines Teils von Programm-Bytes.

4. Sensor für ein Reifendrucküberwachungssystems in einem Kraftfahrzeug, wobei der Sensor intern umfasst:
- eine Datenverarbeitungseinheit,
- eine elektrisch löschbare Speicherzelle,
- eine Sensoreinheit, welche wenigstens einen Drucksensor umfasst, und
- eine Datenübertragungseinheit,
wobei die Datenverarbeitungseinheit intern mit einem elektrisch löschbaren Codierungsverfahren-Speichermodul versehen ist, in welchem mehrere Codierungsverfahren gespeichert sind, und die Datenverarbeitungseinheit ferner mit einem Codierungsverfahren-Verarbeitungsmodul versehen ist, welches zum Verarbeiten unerwünschter Codierungsverfahren in dem Codierungsverfahren-Speichermodul auf der Basis eines Codierungsverfahren-Verarbeitungsbefehls verwendet wird, auf diese Weise sind die unerwünschten Codierungsverfahren Gegenstand einer Löschung oder eines Codierungsfehlers oder eines Fehlers beim Aufrufen zur Codierung, und
wobei die unerwünschten Codierungsverfahren Codierungsverfahren außer einem benötigten Codierungsverfahren sind,
**dadurch gekennzeichnet, dass** die Datenverarbeitungseinheit ferner intern mit einem Codierungsverfahren-Sperrmodul versehen ist, welches zum Sperren der benötigten Codierungsverfahren auf der Basis eines Codierungsverfahren-Sperrbefehls oder eines reagierenden Induktionssignals, wie z.B. Beschleunigungs- und Drucksignalen, verwendet wird, so dass es unmöglich ist, die benötigten Codierungsverfahren zu löschen oder zu modifizieren.

5. Sensor nach Anspruch 4, wobei die Datenübertragungseinheit ferner ein drahtloses Datenübertragungsmodul oder ein drahtgebundenes Datenübertragungsmodul umfasst.

6. Reifendrucküberwachungssystem in einem Kraftfahrzeug, umfassend:
- einen Sensor nach einem der Ansprüche 4 bis 5 und
- eine Sensoreinstellungsvorrichtung;
- eine Datenverarbeitungseinheit;
- eine Dateneingabeeinheit und
- eine Datenübertragungseinheit;
wobei die Sensoreinstellungsvorrichtung mit einem Codierungsverfahren-Verarbeitungsbefehl-Speichermodul zum Aufrufen der Datenverarbeitungseinheit versehen ist, der Codierungsverfahren-Verarbeitungsbefehl in dem Codierungsverfahren-Verarbeitungsbefehl-Speichermodul gespeichert ist und die Datenübertragungseinheit auf der Basis des Befehls von der Datenverarbeitungseinheit den in dem Codierungsverfahren-Verarbeitungsbefehl-Speichermodul gespeicherten Codierungsverfahren-Verarbeitungsbefehl nach außen überträgt und
wobei die Sensoreinstellungsvorrichtung mit einem Codierungsverfahren-Sperrbefehl-Speichermodul zum Aufrufen der Datenverarbeitungseinheit versehen ist, der Codierungsverfahren-Sperrbefehl in dem Codierungsverfahren-Sperrbefehl-Speichermodul gespeichert ist; die Datenübertragungseinheit auf der Basis des Befehls von der Datenverarbeitungseinheit den in dem Codierungsverfahren-Sperrbefehl-Speichermodul gespeicherten Codierungsverfahren-Sperrbefehl nach außen überträgt.

7. System nach Anspruch 6, wobei die Datenübertragungseinheit der Sensoreinstellungsvorrichtung außerdem ein drahtloses Datenübertragungsmodul oder ein drahtgebundenes Datenübertragungsmodul umfasst.

## Revendications

1. Procédé pour le réglage d'un capteur d'un système de surveillance de la pression des pneus dans un véhicule à moteur, le procédé comprenant les étapes suivantes :
- mise à disposition du capteur, dans lequel est préalablement stockée une pluralité de procédures d'encodage ;
- mise à disposition d'un dispositif de réglage de capteur, dans lequel est stockée une instruction de traitement de procédure d'encodage envoyée au capteur, et
- envoi d'une instruction de traitement de procédure d'encodage au capteur par un câble ou sans fil par le dispositif de réglage une fois ou plus d'une fois,
dans lequel le capteur reçoit l'instruction de traitement de procédure d'encodage, sur la base de laquelle toutes les autres procédures d'encodage hormis une procédure d'encodage requise sont traitées une fois pour toutes ou une par une, de telle façon que les procédures d'encodage traitées sont soumises à la suppression ou à un défaut d'encodage ou à un défaut d'invocation d'encodage,
**caractérisé en ce qu'**une instruction de verrouillage de traitement de procédure d'encodage est en outre stockée dans le dispositif de réglage du capteur, le procédé comprenant en outre les étapes suivantes :
- avant ou après l'envoi ou en même temps que l'envoi de l'instruction de traitement de procédure d'encodage, le dispositif de réglage du capteur envoie l'instruction de verrouillage de traitement de procédure d'encodage au capteur par un câble ou sans fil, et
- après la réception de l'instruction de verrouillage de traitement de procédure d'encodage et avant le traitement d'autres procédures d'encodage hormis la procédure d'encodage requise, le capteur verrouille la procédure d'encodage requise, de telle façon qu'il est impossible de supprimer ou de modifier la procédure d'encodage requise,
ou **en ce que** le capteur verrouille la procédure d'encodage requise en répondant à un signal d'induction tel que des signaux d'accélération et de pression, de telle façon qu'il est impossible de supprimer ou de modifier la procédure d'encodage requise.

2. Procédé selon la revendication 1, dans lequel l'instruction de traitement de procédure d'encodage est une instruction de suppression de programme, ou une instruction de modification de programme ou une instruction de sélection de procédure d'encodage.

3. Procédé selon la revendication 1, dans lequel le dispositif de réglage du capteur envoie l'instruction de traitement de procédure d'encodage intégralement au capteur par des codes de correspondance multiple, notamment en envoyant un élément d'octets de programme.

4. Capteur pour un système de surveillance de la pression des pneus dans un véhicule à moteur, dans lequel le capteur comprend intérieurement :
- une unité de traitement de données,
- une cellule de mémoire effaçable électriquement,
- une unité de capteur, comprenant au moins un capteur de pression, et
- une unité de transmission de données,
dans lequel l'unité de traitement de données est pourvue intérieurement d'un module de mémoire de procédures d'encodage effaçable électriquement, dans lequel sont stockées une pluralité de procédures d'encodage, et l'unité de traitement de données est en outre pourvue d'un module de traitement de procédures d'encodage utilisé pour traiter des procédures d'encodage indésirables dans le module de mémoire de procédures d'encodage sur la base d'une instruction de traitement de procédure d'encodage, de telle façon que les procédures d'encodage indésirables sont soumises à la suppression ou à un défaut d'encodage ou à un défaut d'invocation d'encodage, et
dans lequel les procédures d'encodage indésirables sont des procédures d'encodage à l'exception des procédures d'encodage requises,
**caractérisé en ce que** l'unité de traitement de données est en outre pourvue intérieurement d'un module de verrouillage de procédures d'encodage utilisé pour verrouiller, sur la base d'une instruction de verrouillage de traitement de procédure d'encodage ou d'un signal d'induction de réponse tel que des signaux d'accélération et de pression, les procédures d'encodage requises de telle façon qu'il est impossible de supprimer ou de modifier les procédures d'encodage requises.

5. Procédé selon la revendication 4, dans lequel l'unité de traitement de données comprend en outre un module de transmission de données sans fil ou un module de transmission de données par câble.

6. Système de surveillance de la pression des pneus dans un véhicule à moteur, comprenant :
- un capteur selon l'une des revendications 4 à 5, et
- un dispositif de réglage de capteur,
dans lequel le dispositif de réglage de capteur comprend :
- une unité de traitement de données ;
- une unité d'entrée de données, et
- une unité de transmission de données ;
dans lequel le dispositif de réglage de capteur est pourvu d'un module de mémoire d'instructions de traitement de procédures d'encodage pour appeler l'unité de traitement de données, l'instruction de traitement de procédure d'encodage est stockée dans le module de mémoire d'instruction de traitement de procédures d'encodage, et l'unité de transmission de données transmet à l'extérieur, sur la base de l'instruction provenant de l'unité de traitement de données, l'instruction de traitement de procédure d'encodage stockée dans le module de mémoire d'instruction de traitement de procédures d'encodage ; et
dans lequel le dispositif de réglage de capteur est pourvu d'un module de mémoire d'instruction de verrouillage de traitement de procédure d'encodage pour appeler l'unité de traitement de données, l'instruction de verrouillage de traitement de procédure d'encodage est stockée dans le module de mémoire d'instruction de verrouillage de traitement de procédure d'encodage ; l'unité de transmission de données transmet à l'extérieur, sur la base de l'instruction provenant de l'unité de traitement de données, l'instruction de verrouillage de traitement de procédure d'encodage stockée dans le module de mémoire d'instruction de verrouillage de traitement de procédure d'encodage.

7. Procédé selon la revendication 6, dans lequel l'unité de transmission de données du dispositif de réglage de capteur comprend également un module de transmission de données sans fil ou un module de transmission de données par câble.
